# EUROPEAN PATENT APPLICATION

(11) **EP 1 956 775 A1**
(43) Date of publication of application: **13.08.2008**
(21) Application number: 07120417.6
(22) Date of filing: 09.11.2007
(51) Int. Cl.: H04L 12/58

(54) **Method and system for restricting access to an electronic message system**

(30) Priority: 08.02.2007 NL 1033356
(71) Applicant: DLB Finance & Consultancy B.V., 4874 LV Etten-Leur (NL); HITD Information Technology B.V., 3181 NM Rozenburg (NL)
(72) Inventor: Benschop, Dirk Leonard, 4874 LV Etten-Leur (NL); Benschop, Henderik Reinout, 3181 NM Rozenburg (NL)
(74) Representative: van Looijengoed, Ferry Antoin Theodorus

(57) **Abstract**

The invention relates to a method and system for restricting access to an electronic message system. The electronic message system comprises a server system capable of transmitting an electronic message from a first user device to one or more second user devices. The method involves receiving an electronic message from the first user device and providing the electronic message or a portion thereof to one or more of the second user devices. Spam notification signals may be received for the electronic message or the portion thereof from one or more of the second user devices. The method involves restricting access to the server system for the (user of the) first user device in response to receiving said one or more spam notification signals.

## Description

### FIELD OF THE INVENTION

The invention relates to a method and system for restricting access to an electronic message system. More specifically, the invention relates to a method and system for restricting access to an electronic message system, the system comprising a server system capable of transmitting an electronic message from a first user device to one or more second user devices.

### BACKGROUND OF THE INVENTION

E-mail spam may generally be defined as unsolicited and/or undesired e-mail messages received by an e-mail recipient.

The amount of e-mail spam messages has dramatically increased over the last decade. The reason for that may be found in the huge number of addressees that can be reached with an e-mail at negligible costs. This combination of factors together with the obligatory delivery of e-mail has made e-mail or, more generally, electronic messaging an attractive communication medium for advertisement of a variety of products and services. Collections of e-mail addresses of people all over the world can be bought from numerous parties at very low cost. E-mail spam messages now account for more than 90% of all e-mail messages transmitted over the internet. As a consequence, mailboxes of users of the e-mail system are full with electronic spam messages and e-mail spam filters have become a necessity. Moreover, electronic resources are wasted to a serious extent.

The increase of the amount of e-mail spam messages has triggered others to provide e-mail spam filters. These filters can be installed both on the side of the server and on the side of the client devices to detect and delete e-mail spam messages without troubling the user. Typically, these filters analyse e-mail messages and match the analysis results against e-mail spam rules in order to recognize e-mail spam. These e-mail spam rules are designed on the basis of known typical characteristics of e-mail spam messages, such as the number of addressees in the e-mail header or the occurrence of certain words in the e-mail body.

However, new forms of spam will not always be recognized and intercepted by these filters, since the e-mail spam rules are not able to recognize these new forms of spam since these spam rules for the new form of e-mail spam message could not yet have been implemented in the spam filter. As a consequence, a continuous race exists between e-mail spammers and spam filter providers, the latter by definition lagging behind the former. On the other hand, solicited and desired e-mail messages are sometimes filtered from the e-mail box of a recipient, because the e-mail message is qualified as spam as dictated by the e-mail spam rule set of the spam filter.

Furthermore, if e-mail spam filters are installed, the filters analyze each individual e-mail message in order to detect e-mail spam messages. As a consequence, message transfer is delayed and resources are wasted.

It will be apparent that there is a need in the art for an improved or different method and system for reducing the proliferation of electronic messages, in particular e-mail spam messages.

### SUMMARY OF THE INVENTION

It is an object of the invention to provide a method and system reducing the problems identified in the previous section.

To that end, a method for restricting access to an electronic message system is proposed. The electronic message system comprises a server system capable of transmitting an electronic message from a first user device to one or more second user devices. The method involves receiving an electronic message from the first user device and providing the electronic message or a portion thereof to one or more of the second user devices. A portion of an electronic message may e.g. comprise one or more fields of the electronic message or a new portion assembled on the basis of fields or characteristics of the electronic message. Spam notification signals may be received for the electronic message or the portion thereof from one or more of the second user devices. The method involves restricting access to the server system for the (user of the) first user device in response to receiving said one or more spam notification signals.

The applicant also proposes a computer program and a carrier containing such a computer program, wherein the computer program contains software code portions capable of, when installed in and executed by an electronic device, performing the method described in the previous paragraph.

Also, a server system is proposed that is capable of transmitting an electronic message from a first user device to one or more second user devices. The server system comprises an electronic message receiver arranged for receiving an electronic message from the first user device and an electronic message provider arranged for providing the electronic message or a portion thereof to one or more of the second user devices. A spam notification signal receiver is provided for receiving one or more spam notification signals relating to the electronic message or the portion thereof from one or more of the second user devices. The server system contains an access restrictor adapted to restrict access to the server system for (a user of) the first user device in response to receiving said one or more spam notification signals.

It should be noted that access to the server system may be restricted for a user device and/or the user of the user device, the latter option making use of e.g. identification data of the user.

It should also be appreciated that the server system does not necessarily refer to a client-server system. The invention may also be applicable in peer-to-peer networks, such as e.g. used for bittorrent applications, wherein a server or server functionality may be considered to be part of one or more user devices of the peer-to-peer network. The spam notification signal may then e.g. be broadcast over the peer-to-peer network from one user device to others.

The method and system may be embodied as a web application.

The number of spam notification signals required to restrict access to the server system may be set. For example, the number of spam notification signals may be set to 50, 25, 10, 5 or even 1 before server system access is prohibited.

The applicant has realized that the employment of prior art e-mail spam filters is dissatisfactory. The rule set used for recognizing e-mail spam messages is always outdated, despite the regular updates of the rule set provided by the spam filter developers. Ultimately, only human beings will be able to recognize e-mail spam messages. The applicant, therefore, proposes to (solely) use spam notification signals from users to detect electronic spam messages and, upon receipt of such a spam notification signal, to restrict access to server system for the sender of the electronic spam message. The server system thus allows that addressees of an electronic message themselves determine what electronic messages are spam messages and that the addressees are subsequently able to restrict the access (rights) of the sender of that message to the server system. The sender may thus be excluded from further use of the server system. In other words, the spam notification signal is an order to the server system to restrict access to the server system. In case of multiple spam notification signals, each signal can be regarded as a partial order.

Spam filters using spam recognition rule sets, spam parameters and criteria may be absent in the server system, at least for those electronic messages for which a spam notification signal has been received.

The embodiments of claims 2 and 24 provide the possibility of the server system sending a warning signal to the sender of the electronic message for which a spam notification signal was received. This allows for providing the sender with information concerning the consequences of further offences. The consequence of restricting access to the server system can be obtained by the embodiments of claims 3 and 25.

The embodiments of claims 4 and 26 provide for various mitigation mechanisms to mitigate the restriction of the access rights to the server system. In particular, the applicant proposes to restrict access to the server system for senders of the electronic message for which the at least one spam notification signal was received in dependence of a communication history between said sender and one or more addressees from which a spam notification signal was received. As an example, access restriction to the server system may be performed immediately if the sender is unknown to a recipient (e.g. if the sender and recipient have not exchanged electronic messages previously) and the recipient issues a spam notification signal. However, if the sender and recipient know each other, access to the server system is not restricted immediately in response to a spam notification signal issued from the user device of a known recipient (but possibly only after spam notification signals have been received for different electronic messages).

The embodiments of claims 5, 6, 27 and 28 provide the advantage of establishing a subscriber-only system for electronic message distribution. Since the subscribers are known, e-mail spammers and other abusers of the system can be identified and excluded from participation of subscribers to the system. Moreover, this embodiment allows identification of users of the server system to exclude users from the system.

The embodiments of claims 7 and 29 prevent the possibility of sniffing the identity of participants to the system and to subsequently participate in the server system under a false identity. Secure communication may be realized by one or more known techniques, such as encrypting data or providing secure network connections.

The embodiments of claims 8 and 30 allow addressees to inform the system of possible electronic spam. The perception of human beings of an electronic message is the best guarantee of spam recognition. The spam notification signal received by the system may initiate operations by the system on the electronic message (and possible other previous or future electronic messages). The number of spam notification signals required to restrict access to the electronic message may be set. For example, the number of spam notification signals may be set to 50, 25, 10, 5 or even 1 before access to the electronic message is prohibited. Reference is made to a copending international patent application of the applicant ("Method and system for reducing the proliferation of electronic messages") filed on the same date as the present application, the contents of the international application being incorporated in the present application by reference in its entirety.

The embodiments of claims 9 and 31 provide the advantage of limited use of resources. In these embodiments, only small portions (e.g. less than 200 bytes or 100 bytes) characterizing the original electronic message are made available to the addressees. These portions may e.g. include a sender identification, a subject of the electronic message, a date of the electronic message and/or a retrieval key containing information where and/or how to retrieve the complete electronic message. The portions of the electronic message may either be pushed to the servers of the server system or be queried from a particular server of the server system, if needed. Thus, resource consuming processing and network capacity requirements are reduced considerably. Electronic resources are also saved by the embodiments of claims 10-13 and claims 32-35. Reference is made to a copending international patent application of the applicant ("method and system for transmitting an electronic message") filed on the same date as the present application, the contents of the international application being incorporated in the present application by reference in its entirety.

The embodiments of claims 14 and 36 allow for not troubling each user of a user device with the electronic spam message and/or the transmitted portion thereof for which he was an addressee.

The embodiments of claims 15-17 and 37-39 provide the advantage of enabling users to restrict access to other previous and/or future electronic messages from the same source on the basis of a sender identification of an electronic message for which a spam notification signal was received. Provisions can be made to mitigate the severity of such a measure for the sender on the basis of various parameters, such as the number of offences of the sender. In particular, the applicant proposes to restrict access to other electronic messages for addressees of the electronic message for which the at least one spam notification signal was received in dependence of a communication history between said sender and said one or more addressees from which a spam notification signal was received. As an example, access restriction to other electronic messages may be performed immediately if the sender is unknown to the recipient (e.g. if the sender and recipient have not exchanged electronic messages previously). However, if the sender and recipient know each other, access to other electronic messages is not restricted at once (but possibly only after spam notification signals have been received for different electronic messages).

Of course, the server system may employ spam filters in addition to the functionality described in the present application. However, the server system as defined above operates independently from the operation of these possible spam filters as defined in claims 18 and 40.

The embodiments of claims 19 and 41 allow for the approval for exchange of electronic messages in advance. The approval module may be combined by a mandatory address book that the users should use for indicating addressees of an electronic message.

The embodiments of claims 20 and 43 allow for a very effective and simple system for reducing unsolicited electronic mail distribution.

In an embodiment of the invention, the server system would not comprise an e-mail server. E-mail servers typically only store electronic messages and forward the messages upon request. The embodiment of claim 42 proposes to use programmable databases. Programmable databases allow to program predetermined responses in dependence on the type of request received. For spam notification, the users are allowed to perform an operation (requests) on a database, wherein the response of the database is e.g. the restriction of access for other addressees of the electronic message, the restriction of access to other electronic messages of the same source and/or the exclusion of the sender from the system. Moreover, such a programmable database allows for monitoring relations between several parameters.

The applicant also proposes a user device comprising software code portions and a computer program comprising these software code portions for engaging in one or more steps of the above described method and/or to communicate with the above-described server system.

The applicant also proposes a communication system for exchanging electronic message comprising a server system and the first and second user devices.

It should be noted that the above-embodiments, or aspects thereof, may be combined or isolated.

Hereinafter, embodiments of the invention will be described in further detail. It should be appreciated, however, that these embodiments may not be construed as limiting the scope of protection for the present invention.

### BRIEF DESCRIPTION OF THE DRAWINGS

In the drawings:
FIG. 1 shows a schematic example of a communication system for exchanging electronic messages;
FIG. 2 shows a schematic example of a server system;
FIG. 3 shows a flow chart depicting steps of a method for reducing the proliferation of electronic messages for the communication system of FIG. 1;
FIG. 4 illustrates another example of a communication system for exchanging electronic messages;
FIG. 5 shows a flow chart depicting steps of a method for reducing the proliferation of electronic messages for the communication system of FIG. 4, and
FIG. 6 shows an exemplary model for a database of a server of a server system according to an embodiment of the invention.

### DETAILED DESCRIPTION OF THE DRAWINGS

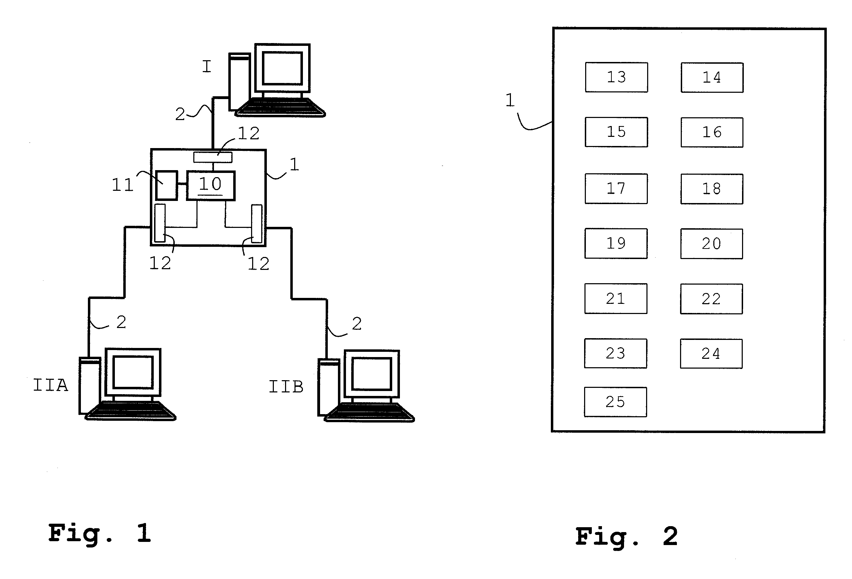

FIGS. 1 and 2 show a server system 1 according to an embodiment of the invention. The server system 1 is connected to a first user device I and second user devices IIA and IIB via network connections 2. The network connections 2 may involve multiple networks, both wired and wireless, and the connection of the user devices I, IIA and IIB is not necessarily direct to the server system 1.

The first and second user devices I, IIA and IIB are arranged for sending and receiving electronic messages, such as e-mail messages, and may be personal computers, mobile communication devices etc.

The server system 1 comprises a processor 10, a memory 11 and a network adapter 12 for communicating with the first and second user devices I, IIA and IIB. It should be appreciated that the server system 1 is normally capable of connecting to more than the three user devices shown in FIG. 1.

The specific functions of the server system 1 are schematically illustrated in FIG. 2 and will now be described in further detail. It should be appreciated that the functions may be largely implemented as software code portions of one or more computer programs executed by the processor 10.

The server system 1 is arranged to receive an electronic message from the first user device I.

The server system 1 comprises an electronic message receiver 13 arranged for receiving an electronic message or a portion thereof and an electronic message provider 14 arranged for providing said electronic message or said portion thereof to the second user device IIA. The server system 1 also contains a spam notification receiver 15 arranged for receiving a spam notification signal from the second user device IIA related to the electronic message or the portion thereof. Also, the server system 1 comprises an access restrictor 16 arranged for restricting access to the server system 1 for the (user of the) first user device I in response to receiving one or more spam notification signals.

The access restrictor 16 is adapted to restrict access to the server system 1 for a sender of the electronic message for which said spam notification signal was received, i.e. the sender using the first user device I. Restriction of the access may involve excluding the user of the first user device I from further sending of electronic messages via the server system 1. However, the server system 1 may comprise an assessor module 17 arranged to restrict access to the server system in dependence on e.g. the number of spam notification signals received for electronic messages of the sender and/or the number of times access has been restricted for electronic messages of the sender.

In particular, a communication history between a sender and the recipient from which a spam notification signal was received may be taken into account. For example, if the users of the first user device I and the second user device IIA have not been engaged in electronic message exchange before (i.e. the users don't 'know' each other), the receiving of the spam notification signal may immediately result in preventing access to the server system 1 for the sender. However, if the user of the first user device I and the second user device IIA have been involved in electronic message exchange in the past (i.e. the users 'know' each other), consequences of the spam notification signal may be less severe for the user of the first user device I. Another example of users 'knowing' each other may be that each of the users have indicated prior to exchange of electronic message that they will accept electronic messages from each other.

The server system 1 comprises a warning message transmitter 18 adapted for sending a warning message to a sender of the electronic message for which said spam notification signal was received from the second user device IIA.

The server system 1 has a register 19 storing a unique login code comprising a user name and a user specific password required for accessing the server system 1 for each user of the user devices I, IIA and IIB.

Communication over the network connections 2 is secured. To that end, the server system 1 contains an encryptor 20 for encrypting part or all communications between the server system 1 and the first and second user devices I, IIA and IIB. It is noted that alternatively, or in addition thereto, the network connections 2 may be secured. Secure communication prevents or reduces the possibility of sniffing identities of (the users of) the first and second user devices I, IIA and IIB.

The server system 1 may be arranged to make a copy of the electronic message for both second user device IIA and IIB. However, it may also be that the server system 1 only stores a single copy of the electronic message received from the first user device I.

The server system 1 also contains a further access restrictor 21 for restricting access to the electronic message for the (user of) the second user device IIB solely in response to receiving a spam notification signal from the second user device IIA. To that end, the server system 1 has an electronic message deleter 22 for deleting the electronic message and the copies and/or portions thereof, if any, in response to the spam notification signal from the second user device IIA.

Furthermore, the server system 1 has a sender identification storage 23 arranged for storing a sender identification of a sender of the electronic message for which the spam notification signal receiver 15 received a spam notification signal, i.e. the identification of the user of the first user device I. If other electronic messages are received or have been received in the past from this user, the further access restrictor 21 may e.g. use the sender identification to restrict access to these further electronic messages for the second user device IIB automatically, i.e. without requiring a further spam notification signal for these further electronic messages. Of course, access restrictions may apply also for the (user of the) second user device IIA.

The further access restrictor 21, possibly under the control of the assessor module 17, may be arranged such that e.g. access is restricted for the (user of the) second user device IIB for a particular time period or to a part of the other electronic messages. However, the further access restrictor 21 may also prevent downloading of the electronic message to said second user device or prevent display of the electronic message on the second user device II.

In particular, a communication history between a sender and the recipient from which a spam notification signal was received may be taken into account. For example, if the users of the first user device I and the second user device IIA have not been engaged in electronic message exchange before (i.e. the users don't 'know' each other), the receiving of the spam notification signal may immediately result in preventing other addressees (such as the user of the user device IIB) from downloading or displaying other past and future electronic messages. However, if the user of the first user device I and the second user device IIA have been involved in electronic message exchange in the past (i.e. the users 'know' each other), consequences of the spam notification signal may be less severe. Another example of users 'knowing' each other may be that each of the users have indicated prior to exchange of electronic message that they will accept electronic messages from each other.

The server system 1 may contain a counter 24 adapted for counting the number of spam notification signals received for electronic messages of a particular sender and/or for counting the number of times access has been restricted for electronic messages of said sender.

It should be noted that the server system 1 may contain a spam filter using a spam rule set, spam parameters and spam criteria for detecting, and possibly restrict access to, electronic spam messages. The server system 1, however, is capable of restricting access to the server system 1 for the (user of the) first device I independent from the operation of the spam filter, i.e. solely on the basis of one or more spam notification signals.

Finally, the server system 1 contains an approval module 25 adapted to allow exchange of electronic messages between a sender, e.g. the user of the first user device I, and an addressee, e.g. the user of the second user device IIA, only if both the sender and the addressee have signaled approval for said exchange to the access module 25 in advance. The computer program running on the user devices I and III for sending and receiving electronic messages may e.g. comprise a mandatory address book under the control of the access module 25. Only by using this address book, a sender may address addressees of the electronic message. Entries in the address book can be made only in response to mutual approval of users to exchange electronic messages.

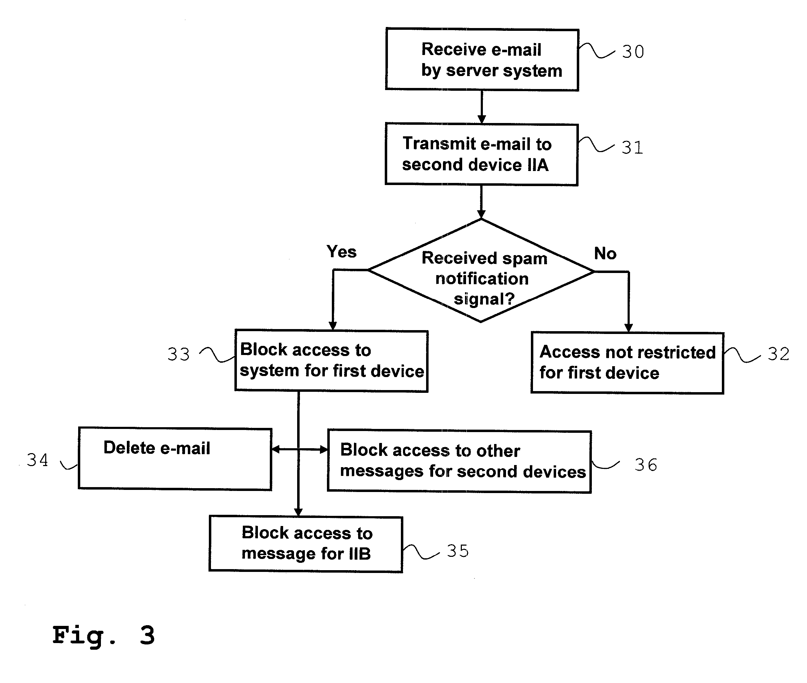

FIG. 3 illustrates a flow chart containing a few steps of the operation of the server system 1 according to an embodiment of the invention.

In a first step 30, the electronic message receiver 13 of the server system 1 receives an electronic message from the first user device I over a secure network connection 2 directed to, amongst others, the users of second user devices IIA and IIB. The electronic message provider 14 of the server system 1 provides the electronic message to the second user device IIA in step 31.

If the first reader, e.g. the user of the second user device IIA, accepts the electronic message as a desired message, a spam notification signal will not be received by the server system 1 in relation to that electronic message. Consequently, the access for the user of the first user device user I to the server system 1 will not be restricted, indicated in step 32.

If the user of the second user device IIA qualifies the contents of the electronic message as spam, he may transmit a spam notification signal relating to the electronic spam message to the server system 1. The user of the second user device IIA may e.g. send a spam notification signal by activating a dedicated button on a user interface of the first user device I. The spam notification signal is detected by the spam notification signal receiver 15 of the server system 1. In response to receiving the spam notification response signal, the access restrictor 16 restricts access to the server system 1 for the user of the first user device I having sent the electronic message for which the spam notification signal was received, indicated as step 33.

Restriction of the access to the server system 1 may involve exempting the user of the first user device I from further sending of electronic messages via the server system 1. As such a measure may be harsh on the user of the first user device I, the assessor module 17 may restrict access to the server system 1 in dependence on e.g. the number of spam notification signals received for electronic messages of the sender and/or the number of times access has been restricted for electronic messages of the sender. In particular, if the sender and recipient have exchanged electronic messages before, access restriction to the server system may be only performed after a certain number of spam notification signals from a recipient, using counter 24.

Apart from denying access to the server system 1 for the sender of electronic message, the spam notification signal may also trigger other actions of the server system 1. The e-mail deleter 22 of the server system 1 may e.g. delete the electronic spam message for which the spam notification signal was received (step 34), thereby restricting access to this e-mail for the user of the second user device IIB (step 35) using further access restrictor 21.

Access may also be restricted to other previous or future electronic messages from the sender of the electronic message for which a spam notification signal was received. The user of the first user device I distributing the electronic spam message is known to the server system 1, e.g. by having stored in register 19 a unique login code comprising a user name and a user specific password required for accessing the server system 1. Using these data, the sender identification storage has stored the identity of the sender of the electronic spam message. If another electronic message is sent (not necessarily an electronic spam message) or has been sent previously, it is determined that for this sender a previous spam notification signal has already been received. Access to these other messages of the sender may therefore be denied as well. Consequently, neither of the second user devices IIA and IIB will have access to these other electronic messages (step 36).

Again, as such a measure may be rather harsh on the sender of the previous electronic spam message, access restriction may be mitigated by allowing the further access restrictor 21 to restrict access for the (user of the) second user device IIB for a particular time period and/or to only a part of the further electronic messages. The assessor module 17 may be used for this purpose. In particular, if the sender and recipient have exchanged electronic messages before, access restriction to other electronic messages may be only performed after a certain number of spam notification signals from a recipient, using counter 24.

It should be appreciated that, while in the above example a single spam notification signal was sufficient to exclude other addressees from receiving (other) electronic messages and to exclude a sender from participation in the server system 1, another number of spam notification signals may be set before such consequences will apply.

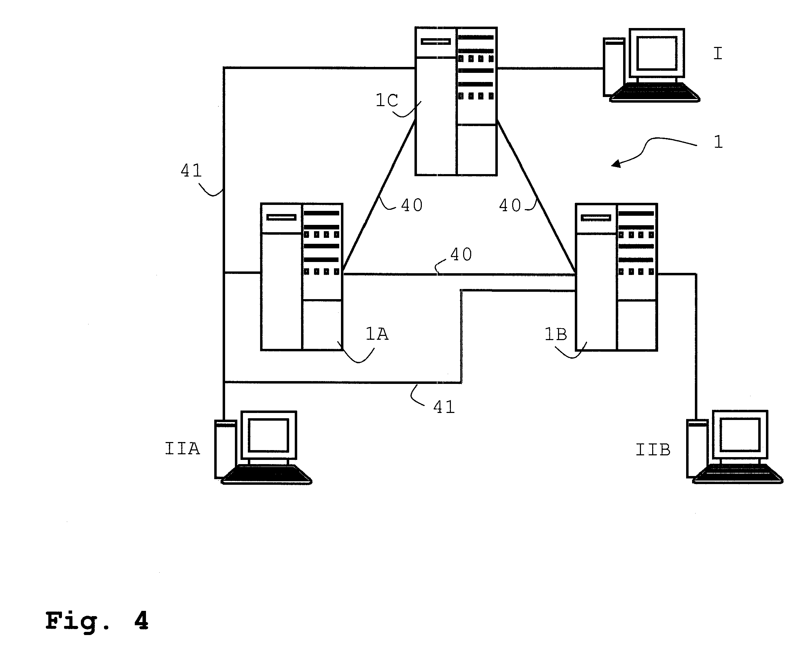

In the system of FIG. 1, the server system 1 comprises a single server. However, the server system 1 may also comprise several servers 1A, 1B, 1C in communicative connection with each other as illustrated in FIG. 4. That is, the servers 1A, 1B and 1C together form a server system 1. The connections 40 connecting the servers 1A, 1B and 1C constitute an inner ring. The first and second user devices I, IIA and IIB may connect to different servers 1A, 1B and 1C of this inner ring, as shown in FIG. 4, either directly or via further servers (not shown). Each of the first and second user devices I, IIA and IIB may also access the servers 1A and 1B; 1B and 1C and 1A and 1C, respectively without using the inner ring formed by the connections 40. In FIG. 4, this outer ring, formed by connections 41, is only drawn for the second user device IIA.

Communication may be secured in both the inner ring and the outer ring. This may be done by encrypting communication over the inner ring and outer ring and/or by making use of secure connections.

Each server 1A, 1B, 1C of the server system 1 may contain the same functional modules 13-25 as described with reference to FIG. 2. However, the functional modules may also be distributed over the various servers 1A, 1B and 1C.

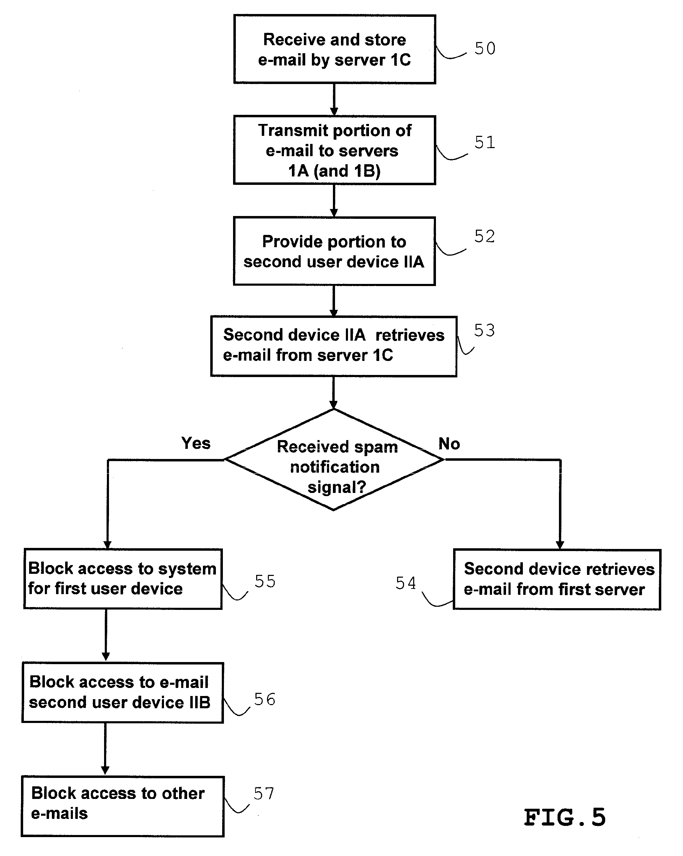

An embodiment of the operation of the system in accordance with FIG. 4 will now be described with reference to FIG. 5.

The user of the first user device I sends an electronic spam message to the server system 1 with the users of user devices IIA and IIB as addressees.

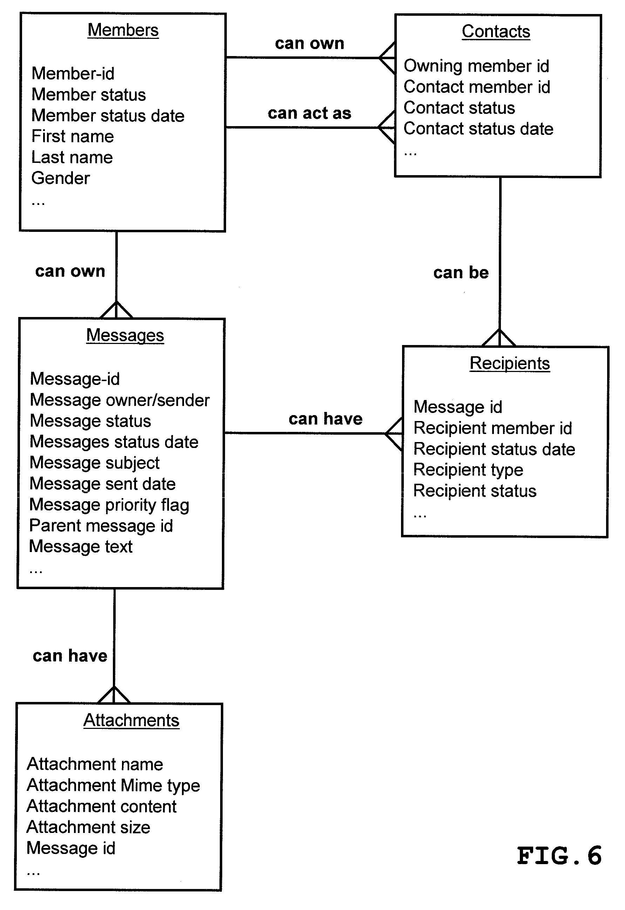

The electronic message receiver 13 of server 1C receives the electronic spam message, possibly divided in fields, and stores the message/fields in the memory 11 in step 50 in a manner further described with reference to FIG. 6. Briefly, instead of storing the electronic message in a conventional e-mail server, individual parts (fields) of the electronic message are stored separately in fields of a database model.

In step 51, the electronic message provider 14 of the third server 1C assembles an electronic message portion with characteristics of the original electronic message. A portion of an electronic message may e.g. comprise one or more fields of the electronic message or a new portion assembled on the basis of characteristics of the electronic message. As an example, the portion of the electronic message contains a sender-field, a subject-field, a retrieval key for retrieving the complete electronic message and possibly a date. The data size of the portion of the electronic message may be less than 200 bytes. A portion provider of the electronic message provider 14 transmits the portion of the electronic message to the first server 1A and the second server 1B using the inner ring of the server system 1. Instead of pushing the portion of the electronic message from the third server 1C to the first and second servers 1A, 1B, the first server 1A may query the portion of the electronic message from the third server 1C upon receiving the request from the second user device IIA to open the mailbox. Reference is made to the international patent application ("Method and system for transmitting an electronic message") from the same applicant and filed on the same date as the present application, the contents of the international application be incorporated in the present application by reference in its entirety. This latter alternative provides the advantage that even the small portions of the electronic message are only transferred if necessary. The complete electronic message is stored only at server 1C.

Again, it is assumed that the user of the second user device IIA first opens his mailbox. By doing so, the first server 1A provides the portion of the electronic message to the first user device I in step 52. The electronic message itself may be retrieved in step 53 by the second user device IIA from the third server 1C over the connections 41 forming the outer ring by selecting the portion of the electronic message provided from the first server 1A.

If the user of the second user device IIA does not qualify the electronic message as spam, the sender of the electronic message continues to have access to the server system 1, since a spam notification signal will not be issued from the second user device IIA (step 54).

If the user of the second user device IIA qualifies the contents of the electronic message as spam, he may transmit a spam notification signal relating to the electronic spam message to the server system 1. The user of the second user device IIA may e.g. send a spam notification signal by activating a dedicated button on a user interface of the first user device I. The spam notification signal is detected by the spam notification signal receiver 15 of the server 1C. In response to receiving the spam notification signal, the access restrictor 16 of the server 1C restricts access to the server system 1 for the user of the first user device I (step 56). As previously described, this consequence can be mitigated, e.g. by taking account of the communication history between the sender and the recipient that issued the spam notification signal using the assessor module 24. A warning message may be sent to the first user device I.

Again, the spam notification signal may trigger further actions by the server system 1. The user of the second user device IIB may be prohibited to display or download the electronic message or the portion thereof (step 56). This may be achieved by deleting the electronic message from the first server 1C and the portions (if any) of the electronic message at servers 1A and 1B. In particular, the e-mail deleter 19 of the server 1C may e.g. delete the portion of the electronic spam message at the second server 1B, such that the user of the second device IIB has no access to the electronic spam message at the third server 1C. Moreover, the e-mail deleter 19 may delete the electronic spam message itself from the memory 11 of the third server 1C as well as the portion of the electronic message from the first server 1A. The deletion of the (portion(s) of) the electronic message is instructed over the inner ring of FIG. 4.

As for the embodiment of FIGS. 1 and 3, the user of the first user device I distributing the electronic spam message may be known to the server system 1, e.g. by having stored in register 19 of the third server 1C a unique login code comprising a user address and a user specific password required for accessing the server system 1. Using these data, the sender identification storage 23 has stored the identity of the sender of the electronic spam message. If an other (previous or future) electronic message is sent or has been sent (not necessarily an electronic spam message), it is determined that for this sender a spam notification signal has already been received. Access to these further messages of the sender may therefore be denied for the users of both second user devices IIA and IIB (step 57). Consequently, neither of the second user devices IIA and IIB will have access to these other electronic messages. As such a measure may be rather harsh on the sender of the previous electronic spam message, consequences may be mitigated by allowing the further access restrictor 21 at the third server 1C to restrict access for the (user of the) second user devices IIA and IIB for a particular time period and/or to only a part of the further electronic messages. In particular, a communication history for the sender may be used for determining the consequences.

It should be appreciated that the register 21 may be shared by multiple servers 1A, 1B and 1C, as well as the sender identification storage 23 for senders of other electronic spam messages.

As mentioned above, the server system 1 stores only a single copy of the electronic message (at server 1C) independent of the number of addressees. The addressees are notified of the electronic message by means of portions characterizing the electronic message of small size. This saves a large amount of resources. However, the server system 1 may provide multiple copies of the electronic message if such an approach proves to be more effective. The number of copies of the electronic message is less than the number of addressees of said electronic message.

Again, it should be appreciated that, while in the above example a single spam notification signal was sufficient to exclude other addressees from receiving (other) electronic messages and to exclude a sender from participation in the system, another number of spam notification signals may be set before such consequences will apply.

The servers 1A, 1B and 1C of the server system 1 are preferably not conventional e-mail servers. Such e-mail servers store e-mail messages, duplicate the e-mail messages to the number of addressees and provide the e-mail messages upon request for a particular one of those messages. The functionality of these mail servers is rather limited.

The applicant proposes to use one or more databases, such as Oracle^{®} databases, for which the response can be programmed in dependence of e.g. the request made to the database. Incoming electronic messages are analyzed as or received in predetermined parts, which are stored in fields of the database(s). As an example, the header of a conventional e-mail is stored in separate fields, some of which are depicted in the data model of FIG. 6.

The methods as described above may be performed in a subscriber-only system, wherein the details of subscribers/participants are known and wherein the subscribers have agreed to comply to particular general conditions. The members of the system have a place in the data model of FIG. 6.

The use of databases for the servers 1A, 1B and 1C allows monitoring relations between different fields, as shown in FIG. 6.

The functionality as described above can be obtained using the database model of FIG. 6.

As an example, if a user issues a spam notification signal, the recipient status and recipient status date are updated. If a single spam notification signal is sufficient for restricting access to the electronic message for other recipients and to restrict access to the server system 1 for a sender, this status will propagate to the message status and the member status, respectively. By adding a messages status date and a member status data to the data model, flexibility is obtained.

Fields of the box "messages" may be part of the portion of the electronic message that is pushed or queried in the server system. Examples include the message owner/sender, the message subject and the message sent date. The message id relates to the retrieval key for retrieving the complete electronic message.

It should be noted that when a mandatory address book for addressing addressees of the electronic message is not used, the box "contacts" may be eliminated in the database model and a link can be established directly from the box "members" to the box "recipients".

The server system 1 may contain an approval module 25. It is noted that the operation of the approval module, possibly in combination with a mandatory address book for addressing addressees of an electronic message, may be applied independently of the method described above, in particular with respect to the spam notification signal. As such, the server system 1 may be so configured for all the participants that any and all information addressed to them as participants cannot reach them and that, prior to the first communication within the system between two participants A and B, the two participants A and B will first have to go through an arrangement/approval protocol.

## Claims

1. A method for restricting access to an electronic message system, the system comprising a server system capable of transmitting an electronic message from a first user device to one or more second user devices, the method comprising the steps by said server system of:
- receiving an electronic message from said first user device;
- providing said electronic message or a portion thereof to one or more of said second user devices;
- receiving one or more spam notification signals relating to said electronic message or said portion thereof from said one or more second user devices; and
- restricting access to said server system for said first user device or a user thereof in response to receiving said one or more spam notification signals.

2. The method according to claim 1, wherein said step of restricting access to said server system comprises providing a warning message to said first user device or a user of said first user device.

3. The method according to claim 1 or 2, wherein said step of restricting access to said server system comprises preventing said first user device or said user thereof from sending further electronic messages via the server system.

4. The method according to one or more of the preceding claims, wherein said step of restricting access to said server system is dependent on at least one of the following:
- the number of spam notification signals received for electronic messages of the sender of said electronic message;
- the number of times access has been restricted for electronic messages of said sender; and
- a communication history between said sender and the one or more addressees of said electronic message from which said spam notification signal was received.

5. The method according to one or more of the preceding claims, wherein users of said first and one or more second user devices are centrally registered.

6. The method according to claim 5, wherein each of said users is provided with a unique login code comprising a user name and a user-specific password for accessing the server system.

7. The method according to one or more of the preceding claims, further comprising the step by said server system of receiving and transmitting said electronic message and possibly said spam notification signal in a secured manner.

8. The method according to one or more of the preceding claims, further comprising the step of restricting access to said electronic message or said portion thereof for one or more of said second user devices in response to receiving one or more of said spam notification signals.

9. The method according to one or more of the preceding claims in a server system comprising at least a first server and a second server, further comprising the steps of:
- receiving said electronic message at said first server;
- storing said electronic message at said first server
- transmitting a portion of said electronic message to said second server;
- receiving said portion of said electronic message at said second server;
- providing said portion of said electronic message from said second server to at least one second user device;
- providing said electronic message from said first server to said at least one second user device in response to selecting said portion of said electronic message.

10. The method according to claim 9, further comprising the step of receiving said spam notification signal at said first server.

11. The method according to claim 9 or 10, further comprising the step of providing multiple copies of said electronic message, wherein the number of copies of said electronic message is less than the number of addressees of said electronic message.

12. The method according to claim 9 or 10, further comprising the step of storing said electronic message only once at said first server.

13. The method according to claim 9, further comprising the step of deleting the electronic message at the first server and/or the portion of the electronic message at the second server in response to said spam notification signal.

14. The method according to one or more of the preceding claims 8-13, wherein said step of restricting said access for said at least one second user device by said server system comprises at least one of the following:
- preventing downloading of said electronic message or said portion thereof to said second user device;
- preventing display of said electronic message or said portion thereof on said second user device.

15. The method according to one or more of the preceding claims, further comprising the steps of:
- receiving said electronic message
- receiving a spam notification signal from at least one of said second user devices for said electronic message;
- storing a sender identification of a sender of said electronic message for which said spam notification signal was received;
- receiving or having received one or more other electronic messages from said sender;
- restricting access to at least one of said other electronic messages for at least one of said second user devices using said sender identification.

16. The method according to claim 15, wherein said step of restricting access to said other electronic messages includes at least one of the following steps:
- restricting access to said other electronic messages for a particular time period;
- restricting access to a part of said other electronic messages; and
- restricting access to said other electronic messages for addressees of said other electronic messages in dependence of a communication history between said sender and said one or more addressees.

17. The method according to claim 16, wherein said time period or said part is determined by at least one of the following:
- the number of spam notification signals received for electronic messages of a particular sender;
- the number of times access has been restricted for electronic messages of said sender.

18. The method according to one or more of the preceding claims, wherein said method steps are performed independently from the operation of a spam filter using a spam rule set to detect electronic spam messages received by said system.

19. The method according to one or more of the preceding claims, wherein said server system comprises an approval module allowing exchange of electronic messages between a sender and a recipient only if both the sender and the recipient have signaled approval for said exchange to said access module in advance.

20. The method according to one or more of the preceding claims, wherein access to said server system is restricted in response to receiving only a single spam notification signal.

21. A computer program comprising software code portions adapted for, when installed in and executed by an electronic system, performing the method according to claims 1-20.

22. A carrier containing the computer program of claim 21.

23. A server system capable of transmitting an electronic message from a first user device to one or more second user devices, the server system comprising:
- an electronic message receiver arranged for receiving an electronic message from said first user device;
- an electronic message provider arranged for providing said electronic message or a portion thereof to one or more of said second user devices;
- a spam notification signal receiver arranged for receiving one or more spam notification signals relating to said electronic message or said portion thereof from said one or more second user devices; and
- an access restrictor adapted to restrict access to said server system for said first user device or a user thereof in response to receiving said one or more spam notification signals.

24. The server system according to claim 23, wherein said access restrictor comprises a warning message transmitter adapted to provide a warning message to said first user device or a user of said first user device.

25. The server system according to claim 23 or 24, wherein said access restrictor is adapted for preventing said first user device or said user thereof from sending further electronic messages via the server system.

26. The server system according to one or more of the claims 23-25, wherein said server system comprises an assessor module, wherein said assessor module is arranged to control said access restrictor such that restricting access to said server system is dependent on at least one of the following:
- the number of spam notification signals received for electronic messages of the sender of said electronic message;
- the number of times access has been restricted for electronic messages of said sender; and
- a communication history between said sender and the one or more addressees of said electronic message from which said spam notification signal was received.

27. The server system according to one or more of the claims 23-26, wherein said server system comprises a central register arranged for registering users of said first and one or more second user devices.

28. The server system according to claim 27, wherein said register comprises at least a unique login code comprising a user name and a user-specific password for accessing the server system for users of said first and second user devices.

29. The server system according to one or more of the claims 23-28, wherein said server system comprises means for securing communication with said first and one or more of said second user devices.

30. The server system according to one or more of the claims 23-29, wherein said server system comprises a further access restrictor adapted for restricting access to said electronic message or said portion thereof for one or more of said second user devices in response to receiving one or more of said spam notification signals.

31. The server system according to one or more of the claims 23-30, wherein said server system comprises at least a first server and a second server, wherein said first server comprises:
- an electronic message receiver for receiving said electronic message;
- storage means for storing said electronic message;
- an electronic message provider adapted for providing a portion of said electronic message on the basis of said received electronic message;
- a transmitter for transmitting said portion of said electronic message to said second server, and
- a transmitter for transmitting said electronic message to said at least one second user device in response to receiving a request for said electronic message from said second user device;
and said second server comprises:
- an electronic message receiver arranged for receiving said portion of said electronic message from said transmitter of said first server;
- means for providing said at least one second user device with said portion of said electronic message.

32. The server system according to claim 31, wherein said first server further comprises said spam notification signal receiver.

33. The server system according to one or more of the claims 23-32, wherein said server system is arranged for providing multiple copies of said electronic message, wherein the number of copies of said electronic message is less than the number of addressees of said electronic message.

34. The server system according to one or more of the claims 23-32, wherein the system is arranged such that only the storage means of the first server stores said electronic message.

35. The server system according to one or more of the claims 31-34, wherein the server system comprises an electronic message deleter and an electronic message portion deleter arranged for deleting the electronic message at the first server and the electronic message portion at the second server in response to said spam notification signal.

36. The server system according to one or more of the claims 30-34, wherein said further access restrictor is arranged to prevent at least one of the following:
- downloading of said electronic message or said portion thereof to said second user device;
- display of said electronic message or said portion thereof on said second user device.

37. The server system according to one or more of the claims 23-36, wherein said system further comprises a sender identification storage arranged for storing a sender identification of a sender of said electronic message for which said spam notification signal receiver received a spam notification signal, wherein said electronic message receiver is arranged to receive or have received other electronic messages and wherein a further access restrictor is adapted for restricting access to at least one of said other electronic messages for at least one or said second user devices using said sender identification.

38. The server system according to claim 37, wherein said server system comprises an assessor module, wherein said assessor module is arranged to control said further access restrictor such that restricting access to said other electronic message is dependent on at least one of the following:
- restricting access to said other electronic messages for a particular time period;
- restricting access to a part of said other electronic messages.
- restricting access to said other electronic messages for addressees of said other electronic messages in dependence of a communication history between said sender and said one or more addressees.

39. The server system according to claim 34, wherein said server system further comprises at least one of:
- a counter adapted for counting the number of spam notification signals received for electronic messages of a particular sender, and
- a counter adapted for counting the number of times access has been restricted for electronic messages of said sender.

40. The server system according to one or more of the claims 23-39, wherein said server system is adapted to operate independently from a spam filter using a spam rule set for detecting electronic spam messages.

41. The server system according to one or more of the claims 23-40, further comprising an approval module adapted to allow exchange of electronic messages between a sender and a recipient only if both the sender and the recipient have signaled approval for said exchange to said access module in advance.

42. The server system according to one or more of the claims 23-41, wherein one or more of said servers comprise a programmable database.

43. The server system according to one or more of the preceding claims 23-42, wherein said access restrictor is adapted to restrict access to said server system for said first user device or a user thereof in response to receiving a single spam notification signal.

44. A user device comprising software code portions adapted to engage in the method according to one or more of the claims 1-20 and/or to communication with the server system according claims 23-43.

45. A computer program for the user device of claim 41 comprising software code portions adapted for, when installed on and executed by a processor of the user device, to perform one or more steps of the method of claims 1-20 and or to communicate with the server system of claims 23-43.

46. A communication system for exchanging electronic messages comprising a server system according to one or more of the claims 23-43 and at least the first user device and a second user device.
